# EUROPEAN PATENT APPLICATION

(11) **EP 1 475 635 A1**
(43) Date of publication of application: **10.11.2004**
(21) Application number: 04252640.0
(22) Date of filing: 06.05.2004
(51) Int. Cl.: G01N 30/52, G01N 30/86, G01N 15/08, G01N 33/543

(54) **In vitro method of determining drug permeability using immobilized artificial membrane chromatography**

(30) Priority: 06.05.2003 US 468099
(71) Applicant: Patheon Inc., Missisauga, Ontario L5N 7J8 (CA)
(72) Inventor: Guo, Junan, c/o Patheon Inc., Mississauga, Ontario L5N 7J8 (CA); He, Ping, c/o Patheon Inc., Mississauga, Ontario L5N 7J8 (CA); Qu, Anthony Yi, c/o Patheon Inc., Mississauga, Ontario L5N 7J8 (CA); Yang, Steve Yong-Tao, c/o Patheon Inc., Mississauga, Ontario L5N 7J8 (CA); Anik, Shabbir, c/o Patheon Inc., Mississauga, Ontario L5N 7J8 (CA)
(74) Representative: Matthews, Derek Peter

(57) **Abstract**

The present invention provides a method for determining drug permeability, wherein the method comprises, for each reference drug of at least two reference drugs having (i) the same ionization state at a given pH and (ii) a known drug permeability determined by the same drug permeability testing technique, the calculation of a metric related to retention time of each reference compound eluted from a liquid chromatography column having an immobilized artificial membrane functional group. Then, based on each metric and each known drug permeability, drug permeability is expressed as a function of the metric. The method may further comprise the calculation of the metric related to retention time for a further drug eluted from the liquid chromatography column, the further drug having the same ionization state at the given pH and an unknown drug permeability, and an assessment of drug permeability for the further drug, based on the metric for the further drug and the function.

## Description

### CROSS-REFERENCE TO RELATED APPLICATION

This application claims priority from U.S. provisional patent application Serial No. 60/468,099, filed May 6, 2003, the contents of which is herein fully incorporated by reference.

### FIELD OF THE INVENTION

The present invention relates generally to assay methods for determining drug permeability, and particularly to methods using immobilized artificial membrane chromatography to determine drug permeability.

### BACKGROUND OF THE INVENTION

The testing of a new drug product, or the comparison of generic versions of a drug product to the reference product, requires an assessment of the safety and efficacy of the drug product being tested. Drug solubility in aqueous solutions and drug intestinal permeability are factors which are considered in the measure of efficacy.

According to the FDA Biopharmaceutics Classification System (BCS), drug substances are classified into one of four classes, depending on their solubility in aqueous solutions and their permeability to membranes: high solubility/high permeability (Class I); low solubility/high permeability (Class II); high solubility/low permeability (Class III); and low solubility/low permeability (Class IV). Thus, determining the permeability of drug substances is an important aspect of the BCS classification of active pharmaceutical compounds (I. Kanfer (2002) *J Pharm Pharmaceut Sci* 5(1): 1-4.).

The currently acceptable FDA methods for determining drug permeability include in vivo pharmacokinetic studies in humans; in vivo intestinal perfusion studies in humans; in vivo or in situ intestinal perfusion studies using suitable animal models; in vitro permeation studies using excised human/animal intestinal tissues, or using cultured epithelial cells such as Caco-2 cells.

Drug permeability assays using Caco-2 cells are currently widely used. Caco-2 cells are human colon adenocarcinoma cells that differentiate in culture to resemble intestinal epithelial cells. A Caco-2 monolayer therefore provides a good in vitro model for transport and permeation of active pharmaceutical compounds across the human small intestine. However, although this methodology has been accepted by the FDA, there is no industry consensus with respect to standard assay conditions, and various sub-clonal lines derived from Caco-2 cells are used in various laboratories.

Chromatographic models predicting drug permeability are much easier to use and are reasonably effective in modelling the hydrophobic and hydrophilic interactions between a chemical compound and epithelial membranes. For example, US 4,931,498, issued to Pidgeon, describes immobilized artificial membrane (IAM) systems for use in chromatography systems, including high-pressure liquid chromatography systems. Essentially, amphiphilic constituents of biological membranes, such as phospholipids, are immobilized on a solid support that can be used as the stationary phase with an aqueous mobile phase in the chromatography system to measure the interaction of various biologically active molecules with the artificial membrane.

However, to date, such chromatography systems have proven to be a poor replacement for other in vivo or in vitro methods of testing drug permeability, due to the poor correlation of results between known drug permeability values, for example, those derived from tests using Caco-2 cells, and the retention time for a given compound on an IAM column. The IAM methods provide an ability to only coarsely predict permeability values when compared to Caco-2 testing methods. For example, under certain conditions, a retention time of less than 6 minutes on an IAM column indicates low absorptions across Caco-2 cells, whereas a retention time greater than 6 minutes indicates a likelihood of absorption across Caco-2 cells. This coarse correlation between results from an accepted permeability assay and the results obtained from IAM methods renders the IAM methods of little use when comparing results obtained for drugs that have not been tested by the FDA accepted methods (such as using Caco-2 cells), with drugs that have only been tested for permeability using the FDA accepted methods.

### SUMMARY OF THE INVENTION

The present invention provides a method for correlating capacity factor measurements obtained from immobilized artificial membrane chromatography techniques with data obtained from alternate drug permeability assay methods, such as in vivo pharmacokinetic studies in humans; in vivo intestinal perfusion studies in humans; in vivo or in situ intestinal perfusion studies using suitable animal models; in vitro permeation studies using excised human/animal intestinal tissues, or using cultured epithelial cells.

The methods of the present invention therefore allow for an inexpensive, convenient, high-throughput method of determining drug permeability values for new active pharmaceutical compounds, which can be correlated with those obtained by alternate methods. Thus, using the methods of the present invention, it is possible to determine an apparent drug permeability value, which value may be used as the basis for further drug development, without the need to perform the more expensive and time consuming accepted permeability test at a preliminary stage on a large number of potential drug candidates.

The correlation is achieved by first categorizing active pharmaceutical compounds having a known drug permeability value into one of three categories: single positive charge, neutral or single negative charge, as determined at the pH at which the chromatography is to be performed. Compounds falling into a single category can be used to generate a reference curve, which may then be used to provide a drug permeability value for active pharmaceutical compounds falling within the same category and which have not been tested by an alternate method, by extrapolating or interpolating from the value obtained for capacity factor on the reference curve.

Thus, the present invention provides a method for determining drug permeability of reference compounds to generate a standard curve. For each reference compound, of at least two reference compounds having the same ionization state at a given pH and a known drug permeability determined by the same drug permeability testing technique, a metric is determined relating to the retention time of each reference compound eluted from a liquid chromatography column having an immobilized artificial membrane functional group, and based on the metric and the known drug permeability for each reference compound, drug permeability is determined as a function of the metric.

The reference curve may then be used to determine an apparent drug permeability of a test chemical compound without first measuring the drug permeability by an accepted FDA methodology. A metric related to retention time is determined for the test compound drug eluted from said liquid chromatography column, where the test compound has the same ionization state as the reference compounds at the given pH. The apparent drug permeability value can then be assessed based on the metric for the test compound and a function derived from the reference compounds.

In accordance with one aspect, there is provided a method for determining drug permeability, comprising for each reference drug of at least two reference drugs having (i) the same ionization state at a given pH and (ii) a known drug permeability determined by the same drug permeability testing technique, calculating a metric related to retention time of each reference compound eluted from a liquid chromatography column having an immobilized artificial membrane functional group; and based on each metric and each known drug permeability, expressing drug permeability as a function of the metric. In certain embodiments, the method further comprises calculating the metric related to retention time for a further drug eluted from the liquid chromatography column, the further drug having the same ionization state at the given pH and an unknown drug permeability; and assessing drug permeability for the further drug based on the metric for the further drug and the function.

In accordance with another aspect of the invention, there is provided a method of determining a reference curve for calculating drug permeability for a chemical compound comprising categorizing a first reference compound based on ionization state at a given pH, the first reference compound having a known drug permeability value determined by an alternate drug permeability assay; introducing the first reference compound to a liquid chromatography column, the column having an immobilized artificial membrane functional group; eluting the first reference compound from the column with a mobile phase; measuring the retention time required to elute the first reference compound from the column; calculating a metric from the retention time of the first reference compound; repeating the above steps for at least a second reference compound having the same ionisation state at the given pH; and expressing the known permeability value as a function of the metric calculated for each reference compound having the same ionisation state so as to obtain a curve.

In accordance with another aspect of the invention, there is provided a method of determining permeability for a chemical compound comprising categorizing the chemical compound based on ionisation state at a given pH; introducing the chemical compound to a liquid chromatography column, the column having an immobilized artificial membrane functional group; eluting the chemical compound from the column with a mobile phase; measuring the retention time required to elute the chemical compound from the column; calculating a metric from the retention time of the chemical compound; and determining a permeability value for the chemical compound by comparing the metric with a reference curve derived for reference compounds having the ionisation state at the given pH.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

In the figures, which illustrate, by way of example only, embodiments of the present invention,

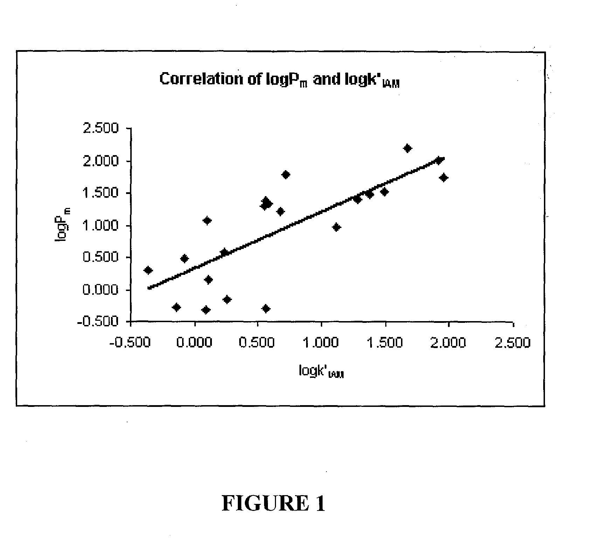

**Figure 1** illustrates the reference curve generated by expressing logarithm of drug permeability value versus logarithm of capacity factor for a set of reference compounds having a single positive charge at a given pH.

### DETAILED DESCRIPTION

All of the currently acceptable FDA methods for determining drug permeability are time consuming and require expensive materials. Therefore, an alternative approach for determining drug permeability would be extremely beneficial, particularly for use in situations where a large number of drug candidates are to be preliminarily tested in order to assess their feasibility for development. Thus, an efficient method of high-throughput testing for assessing the apparent drug permeability of a large number of samples is desired. In vitro models for drug permeability have been and are currently being developed because in vivo and in situ experiments are experimentally difficult, expensive and time consuming.

An immobilized artificial membrane (IAM) is produced by covalently bonding various membrane phospholipids to the surface of a support, which can be used as a stationary phase. A resulting high-pressure liquid chromatography (HPLC) column can be used to measure the phosholipicity of solutes injected in the mobile phase. The column provides a good mimic of a pharmaceutically active compound's interaction with the intestinal epithelial cell membrane when being absorbed in the gut. Previous studies that evaluated the applicability of IAM technology for measuring drug permeability have been unsatisfactory, indicating that current IAM technology does not provide an accurate assessment of a compound's apparent drug permeability properties.

The inventors hypothesized that measurement of in vivo permeability of an active pharmaceutical compound is related to both its hydrophilicity and its lipophilicity, since the drug is transported in gastrointestinal fluids (an aqueous layer) before it reaches the epithelial membrane (a bilayer of phospholipids). When ionized, an active pharmaceutical compound becomes more hydrophilic than in its neutral form. The enhanced hydrophilicity results in greater solubility in aqueous medium. Thus, the ion charge likely has a positive impact on the apparent permeability of the active pharmaceutical compound. However, permeation is not finished until the active pharmaceutical compound has penetrated the epithelial membrane. At this stage, an uncharged compound is the preferred form for penetrating the cell membrane, as the bilayer of phospholipids is lipophilic, and any charge on the pharmaceutical compound will likely negatively impact its permeability.

Thus, based on the hypothesis that both the charge of the compound when in the gastrointestinal tract and the compound's ability to interact with phospholipids may contribute to the overall permeability behavior of an active pharmaceutical compound, the inventors have developed a system for correlating results of drug permeability testing using IAM chromatography with those obtained using accepted methods of permeability testing, for example, testing with Caco-2 cells. The inventors have surprisingly discovered that by pre-categorizing active pharmaceutical compounds based on charge, it is possible to develop a direct correlation between retention time on an IAM column and known drug permeability values, for example, values obtained in a permeability assay using Caco-2 cells, for compounds within each of the predetermined categories

The present method involves categorizing an active pharmaceutical compound into one of at least three categories according to its ionization state at the pH at which the IAM experiment is performed: (i) compounds carrying a single positive charge; (ii) neutral compounds; and (iii) compounds carrying a single negative charge. Without being bound to any particular theory, this categorization recognizes the impact that ionization state has on the ability of the compound to pass through aqueous fluids, while the measure of retention time on the IAM column recognizes the phospholipicity of the compound. Using these categories, it is possible to develop a standard curve for retention times of compounds whose permeability has been assessed by an FDA accepted method, wherein the standard curve provides a correlation between the measured retention time and the previously determined drug permeability value.

Thus, in one aspect of the present invention, there is provided a method of determining a reference curve for calculating drug permeability for a chemical compound. In one embodiment, at least two reference compounds are first categorized based on ionization state, each reference compound having the same ionisation state at a given pH and a known drug permeability value determined by an alternate drug permeability assay. Then, for each reference drug within the same ionisation state category, the reference compound is introduced to a liquid chromatography column having an immobilized artificial membrane functional group and eluted from the column with a mobile phase. The retention time required to elute the reference compound from the column is measured and used to calculate a metric. Once the above steps have been performed for each reference compound, the known permeability value is plotted versus the metric calculated, for each reference compound, so as to obtain a reference curve.

"Drug permeability" refers to the ability of a particular chemical compound's ability to permeate the cell membrane of an intestinal epithelial cell, thereby being taken up by the cell for entry into the bloodstream. Drug permeability is one factor that is measured to assess the efficacy of a pharmaceutical compound and is used to help classify compounds into the four BCS classes, and can be measured using various assay methods that model or approximate the in vivo ability of the active pharmaceutical compound to permeate the epithelial cells lining the intestine.

The term "an alternate drug permeability assay" refers to a method for determining the drug permeability of a compound other than with IAM column chromatography, and includes in vivo pharmacokinetic studies in humans; in vivo intestinal perfusion studies in humans; in vivo or in situ intestinal perfusion studies using suitable animal models; in vitro permeation studies using excised human/animal intestinal tissues, or using cultured epithelial cells such as Caco-2 cells. In a particular embodiment, the alternate drug permeability assay is an assay using Caco-2 cells. In further embodiment, the alternate drug permeability assay is an assay using a monolayer of Caco-2 cells. The alternate drug permeability assay is typically the same assay method for each reference compound used to generate the curve, however, the exact experimental conditions used in that assay method may vary from one reference compound to another.

The chemical compound referred to herein includes an active pharmaceutical compound. The term "active pharmaceutical compound" refers to a chemical compound having a physiological effect in the body when administered to a patient and that may be used as an active ingredient in a pharmaceutical composition to treat, ameliorate or prevent a disease, disorder or condition. The term is used interchangeably with the term "drug".

A "reference curve" as used herein refers to a plot of a known value for assayed samples as a function of an assayed measurement, and may be used to calibrate the assay with respect to the known value. As used herein the assayed measurement is related to retention time on the column, and the known value relates to a permeability value as obtained by an FDA accepted permeability assay, for example, using Caco-2 cells.

The reference compounds that are to be used to generate a particular reference curve are active pharmaceutical compounds that have a known drug permeability value as assessed by any one of the FDA accepted methods. Generally, the majority of active pharmaceutical compounds will carry a single positive or negative charge, or be uncharged, at any given pH. In a preferred embodiment, each reference compound will be a compound for which a drug permeability value has been determined by a method using Caco-2 cells.

Thus, the step of categorising a reference compound based on ionisation state involves determining the ionisation state of the compound at the pH of the mobile phase as being a single positive charge, no charge, or a single negative charge at the relevant pH. To generate a particular reference curve, each reference compound used will come from the same ionisation state category of active pharmaceutical compounds.

Categorizing reference compounds for IAM chromatography assays is done as follows. Any functional group on the compound that can be protonated, will be protonated at the pH of the column if its pKa is higher than the pH of the mobile phase. Similarly, any functional group on the compound that can be deprotonated, will be deprotonated at the pH of the column if its pKa is lower than the pH of the mobile phase. For each compound having one or more protonatable or deprotonatable groups, the charge state for each group at the relevant column pH should be determined. The majority of active pharmaceutical compounds will only have one group carrying a charge at a given pH. The remaining chargeable functional groups, if any, will likely be uncharged at that given pH. Thus, compounds having a single positive charge at the pH of the mobile phase will fall into the first category, and compounds having a single negative charge at the pH of the mobile phase will fall into the third category. For compounds that do not contain any functional groups that can be protonated or deprotonated, the compound will be neutral at the studied pH and they are categorized into the second category (neutral compounds). Preferably, the pH of the mobile phase is chosen such that it is at least 1 pH unit away from the pKa of any chargeable group on the compound, to ensure that the chargeable group has the same charged or uncharged state in the majority of compound molecules to be introduced onto the column.

Generally, the method described herein may be performed using high-pressure liquid chromatography ("HPLC") techniques, which will be apparent to a skilled person. The step of introducing the reference compound to a liquid chromatography column will be generally understood, and includes injection of the reference compound onto the column.

The liquid chromatography column will have a stationary phase, being a solid support that forms the column matrix, and which includes any functional groups that are attached to the solid support by covalent bonds or by affinity interactions, and which may impart specific binding characteristics to the column. For example, without limitation, the solid support may be silica particulates, or may be beads composed of agarose or sepharose. The solid support used in the method described herein will be one having an immobilized artificial membrane functional group linked to it. An "artificial membrane functional group" is a lipid group that is typically found in biological membranes that may be used as a model for measuring the interaction of a compound with a membrane, and includes phospholipid moieties that may be covalently linked to the solid support. For example, IAM solid supports are described in US 4,931,498, which is hereby fully incorporated by reference. IAM columns are commercially available, for example from Regis Tech, as will be known by a skilled person.

The reference compound is prepared in a solvent in which it is soluble for introduction onto the column. For example, the reference compound may be soluble in water, and an aqueous buffer may be used to dissolve the reference compound prior to injection. Certain reference compounds may not be fully soluble in water, and may require dissolution in a solution that contains an organic solvent. In one embodiment, the reference compound is prepared in a solution that contains methanol. In a further embodiment, the reference compound is prepared in a solution containing between 1 and 20% (v/v) methanol, between 5 and 15% (v/v) methanol, or about 10% (v/v) methanol.

The step of eluting the reference compound from the column using a mobile phase will also be generally understood by a skilled person. Once the reference compound has been introduced to the column, the mobile phase is passed through the column, allowing the reference compound to sorb and desorb with the stationary phase, moving down the column. The greater the affinity the reference compound has for the immobilized artificial membrane functional group, the more time it will spend in the stationary phase, taking longer to elute from the column.

The mobile phase may be any solvent or solution in which the reference compound is soluble, and which is more hydrophilic than the stationary phase. Preferably, the mobile phase is similar to physiological solutions found in the intestine and has a physiological relevant pH. In various embodiments, the mobile phase has a pH of between 7.0 and 7.5, or of about 7.4. In certain embodiments, the mobile phase is an aqueous buffer solution that may contain an organic solvent. In a particular embodiment, the mobile phase comprises 85% (v/v) ammonium phosphate pH = 7.4 and 15% (v/v) acetonitrile.

The pH of the mobile phase used may vary from compound to compound, depending on the pKa of the chargeable group or groups on a given compound. The pH of the mobile phase is chosen such that it is preferably 1 pH unit above or below the pKa of each chargeable group on the compound. Thus, for a set of compounds that will be used to generate a reference curve, the pH of the mobile phase may vary between compounds in order to ensure that the compounds fall into the same ionization state category. However, it is preferred that the mobile phase otherwise does not vary between compounds. For example, it is preferred that the particular organic solvent, and the concentration of such solvent, remain the same, as well as the particular buffer used in the mobile phase, where possible. In some circumstances, the buffer used between samples may not be able to be used if the buffer capacity of the buffer does not extend to the pH values at which a particular compound is to be tested.

The retention time for the reference compound to elute from the column is measured by determining the time from introduction of the compound onto the column until it is detected in the column eluant. An adjusted retention time may be calculated, which is the total time from introduction to the column that the compound takes to be eluted from the column minus the time for a void volume of mobile phase to pass through the column.

Standard detection methods known in the art may be used, for example, collecting fractions of eluant and assaying each fraction. Detection technologies may include, for example without limitation, ultraviolet detection, fluorescence detection, evaporative light scattering detection, electrochemical detection and mass spectrometry detection.

The metric is a measurement obtained that relates to or is derived from the retention time of the compound on the column. The metric may be obtained by performing a mathematical operation on or applying a particular mathematical equation to the value measured from the retention time. For example, the metric may be the capacity factor for the compound on the column, or it may be the logarithm of the capacity factor. As used herein, "capacity factor" (k') is a measure of the ability of a particular compound to be retained on a column and is a ratio of the adjusted retention time for that compound on the column (t_{R},) divided by the time for a void volume of mobile phase to flow through the column (t₀).

Thus, in certain embodiments, the metric is calculated from the retention time measured for the reference compound as follows. First, the capacity factor for the particular reference compound is calculated. The capacity factor itself may be used as the metric to be plotted against the known drug permeability value for the reference compound. However, the inventors have discovered that for compounds within a particular ionisation state category, plotting the logarithm of capacity factor versus the logarithm of drug permeability as determined by a Caco-2 assay results in a linear curve. Thus, the logarithm of the capacity factor may be used as the metric in a particular embodiment.

To generate a reference curve, at least two reference compounds must be used. However, a skilled person will recognize that the higher number of reference compounds used, the more accurate the reference curve generated will be. Thus, the above steps may be repeated for as many additional reference compounds within the same ionisation state category as is desired to obtain an accurate reference curve.

Once the metric has been calculated for the appropriate number of reference compounds (in which each reference compound has a known drug permeability value as determined by the same accepted permeability method), the reference curve is generated by plotting the calculated metric for each reference compound against a value derived from the known drug permeability value for that reference compound. The value derived from the known drug permeability value may be the known drug permeability value itself, or it may be a value derived by performing a calculation or operation on the known drug permeability value. In one specific embodiment, the value derived from the known drug permeability value is the logarithm of the known drug permeability value.

Depending on the chromatography column used, including the specific immobilized artificial membrane functional group, the particular mobile phase used, including the pH and composition of the mobile phase, the solvent in which the drug is solubilized for introduction to the column, and other parameters such as flow rate, the reference curve obtained for given reference compounds will vary. In some embodiments, the curve may be a straight line. The slope of the line and the intercept of the line may also vary with the chromatographic parameters mentioned above.

The reference curve generated by the above method can then be used to determine an apparent drug permeability value for compounds for which a drug permeability value has not been assessed using an FDA accepted method. This allows for the use of the inexpensive, convenient and high-throughput method using IAM chromatography to approximate a drug permeability value that is comparable to a value determined using the more expensive and time-consuming FDA accepted assay methods. This is particularly useful in respect of new active pharmaceutical compounds, as this method provides for increasing the speed and decreasing the cost of preliminary screening studies when performed for a large number of potential drug candidates.

Thus, in another aspect, the present invention provides a method of determining apparent drug permeability for a chemical compound. In one embodiment, the method comprises first categorizing the chemical compound that is to be tested based on its ionisation state at a given pH. Once categorized, the compound is introduced to a liquid chromatography column having an immobilized artificial membrane functional group and eluted from the column with a mobile phase. The retention time required to elute the chemical compound is measured and a metric derived from the retention time is calculated. The permeability value is then determined by comparing the metric with a reference curve derived for reference compounds having the same ionisation state as the chemical compound at the given pH.

The "chemical compound" is any compound for which a drug permeability value has not been determined using an alternate method, but for which an approximation or estimate of drug permeability is desired. For example, the chemical compound may be an active pharmaceutical compound for which no permeability assay has been previously performed.

An "apparent drug permeability value" is a value calculated from the reference curve, based on the correlation determined between the metric and the known drug permeability value for the reference compounds, that provides an estimate of a drug permeability value that may be obtained for the chemical compound, if the chemical compound were to be assayed using an accepted FDA drug permeability assay.

The apparent drug permeability values determined for the chemical compound can be assessed by extrapolation or interpolation of the reference curve obtained above for the particular ionisation state category for the particular chemical compound being tested, using the metric determined for the chemical compound. Preferably, the limits of the reference curve are extreme enough to allow for interpolation of drug permeability for the test chemical compound from the reference curve, providing a more accurate drug permeability value.

Generally, the chromatography conditions used for testing the chemical compound will be the same or similar to those used to generate the reference curve, to ensure that the value extrapolated or interpolated from the reference curve is a good estimate of the drug permeability value for the chemical compound being tested.

In some embodiments, a reference compound can also be used along with a test chemical compound, in order to confirm that the chromatography conditions are sufficiently similar to those used to generate the reference curve used, such that the results obtained for the test chemical compound will provide a valid estimate of the drug permeability value. The reference compound may be one of the reference compounds used to generate the reference curve, or it may be another compound for which a drug permeability value is known, and can therefore be used to confirm the accuracy of the chromatography conditions relative to those used to generate the reference curve. The reference sample may be injected onto the column either simultaneously with the chemical compound that is being tested, or it may be injected in a separate column run and then compared to the reference curve.

The present invention will now be more fully described with reference to the following examples, which are illustrative only and should not be considered as limiting the invention described above.

### EXAMPLES

The inventors used 21 reference compounds having a single positive charge at the pH at which the chromatography was performed, each having a published known permeability value, Pₘ, as determined by a Caco-2 cell assay by the various methods set out in references 1-7, below. The conditions used to determine the Caco-2 Pₘ values were generally similar in the cited references, although certain conditions varied between assays. Generally, the assays were performed at pH 7.4, with the exception of procaine and sumatriptan, for which the pH was 5.5 and 6.5, respectively. Therefore, for the experiments set out below, the pH of the mobile phase was 7.4 for all compounds except procaine (pH 5.5) and sumatriptan (6.5).

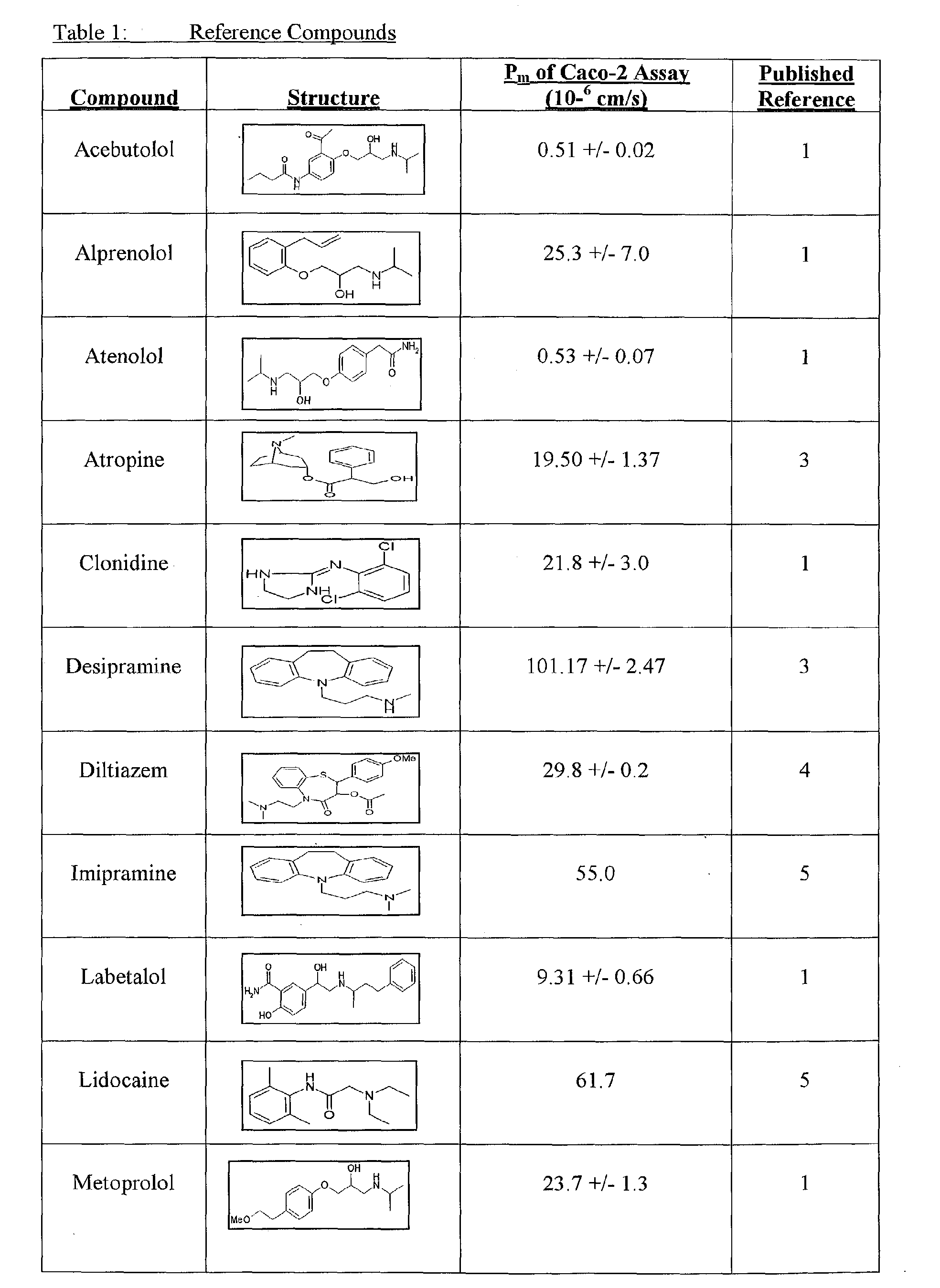

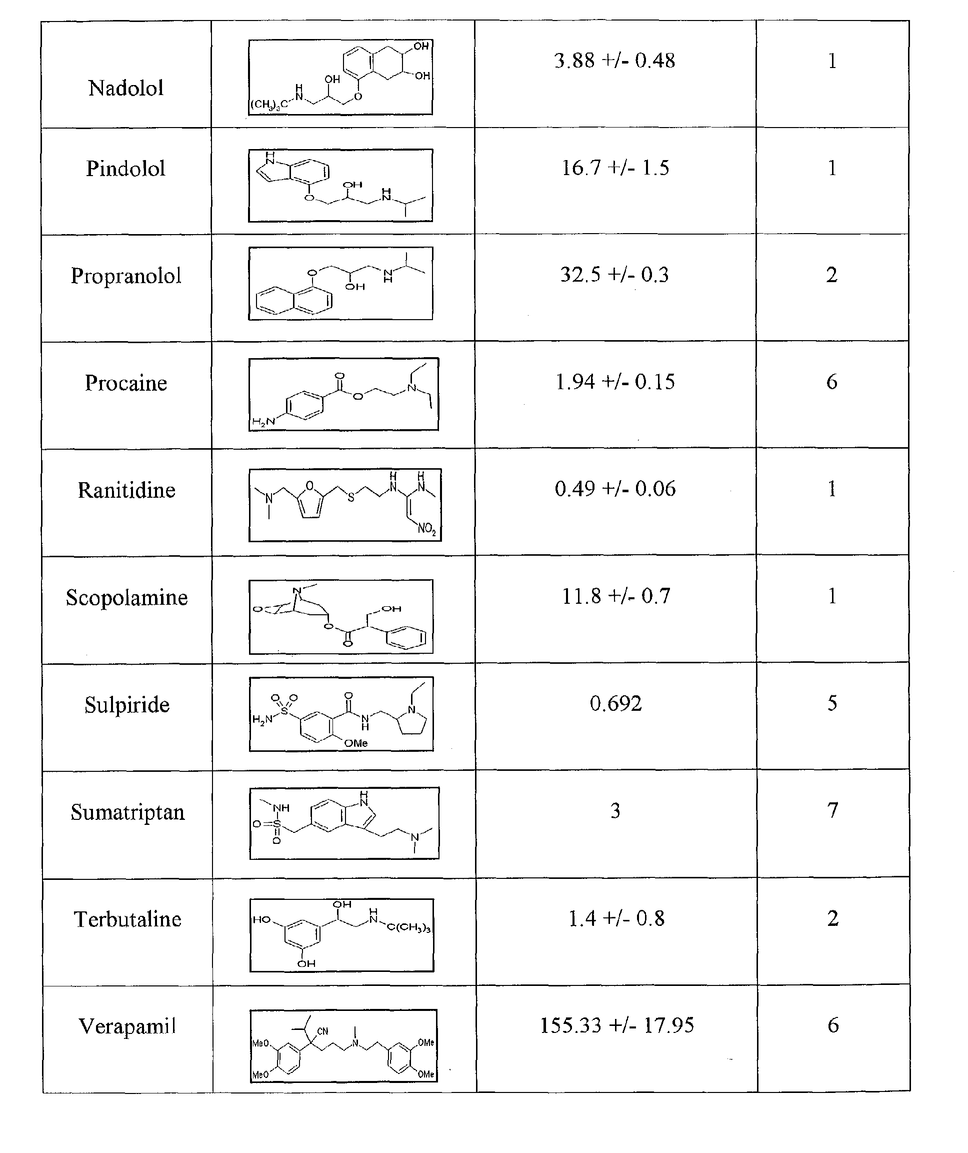

### Published References:

1. M. Yazdanian, et al. 1998. *Pharm. Research* 15(9): 1490.
2. M. Markowska, et al. 2001. *J. Pharmacol. Toxicol. Methods* 46: 51.
3. C. Bergstrom, et al. 2003. *J. Med. Chem.* 46: 558-570.
4. V. Pade and S. Stavchansky. 1998. *J. Pharm Sci.* 87(12): 1604.
5. G. Camenisch, et al. 1998. *Euro. J. Pharm. Sci.* 6: 313.
6. L. Laitinen, et al. 2003. *Pharm. Research* 20(2): 187.
7. S. Yee. 1997. Pharm. Research 14(6): 763.

*Sample Preparation:* Between 3 and 10 mg of each sample was dissolved in a solution of 10% methanol, 90% water in preparation for injection onto the column.

*HPLC Conditions:* A Regis IAM.PC.DD2 column (30 mm X 4.6 mm, 12 µm) was used, run at 37°C at a flow rate of 1.0 ml/min. The column was pre -equilibrated with mobile phase containing 85% (v/v) 0.05 M ammonium phosphate buffer, pH 7.4 and 15% (v/v) acetonitrile, with exception of chromatography runs for procaine and sumatriptan, for which the buffer pH was 5.5 and 6.5, respectively, for consistency with Caco-2 experimental conditions. Elution of reference compounds was detected by ultraviolet absorbance at 210 nm.

*Calculation of k':* Sodium nitrate was injected onto the column and the elution time was measured in order to determine the time for the void volume, t₀, to pass through the column. Each reference compound was then injected onto the column and retention time, t_{R} was recorded by detecting elution by measuring UV absorbance at 210 nm. The capacity factor, k', was calculated by determining the adjusted retention time and dividing by the time for void volume elution, according to the formula k' = (t_{R}- t₀)/ t₀.

*Results:* Sodium nitrate does not interact with the stationary phase of the IAM column, and was therefore chosen to measure the time for void volume elution, t₀. The t₀ determined using sodium nitrate was found to be 0.392 minutes or 0.417 minutes due to different high pressure liquid chromatographic instruments used. Each reference compound was tested three times and an average retention time was used. The results obtained for each reference compound are set out in Table 2 below. A graph illustrating the correlation between log_{Pm} and log_{k'} is shown in Figure 1.

**Table 2:**

| Retention Time and Capacity Factor for Reference Compounds | | | | | | | | | |
|---|---|---|---|---|---|---|---|---|---|
| **Reference Compound** | **P**_{**m**} **(10**^{**-6**} **cm/s)** | **log P**_{**m**} | **Caco 2 Donor pH** | **RT (min)** | | | | **k'**_{**IAM**} | **logk'**_{**IAM**} |
| | | | | **Run 1** | **Run 2** | **Run 3** | **Average** | | |
| Acebutolol | 0.51 | -0.292 | 7.4 | 1.808 | 1.811 | 1.809 | 1.809 | 3.616 | 0.558 |
| Alprenolol | 25.3 | 1.403 | 7.4 | 7.907 | 7.916 | 7.920 | 7.914 | 19.190 | 1.283 |
| Atenolol | 0.53 | -0.276 | 7.4 | 0.677 | 0.677 | 0.677 | 0.677 | 0.727 | -0.138 |
| Atropine | 19.5 | 1.290 | 7.4 | 1.772 | 1.773 | 1.774 | 1.773 | 3.523 | 0.547 |
| Clonidine | 21.8 | 1.338 | 7.4 | 1.897 | 1.898 | 1.898 | 1.898 | 3.841 | 0.584 |
| Desipramine | 101.17 | 2.005 | 7.4 | 32.856 | 32.827 | 32.774 | 32.819 | 82.722 | 1.918 |
| Diltiazem | 29.8 | 1.474 | 7.2 | 9.856 | 9.856 | 9.859 | 9.857 | 24.145 | 1.383 |
| Imipramine | 55 | 1.740 | 7.4 | 36.100 | 36.078 | 36.076 | 36.085 | 91.053 | 1.959 |
| Labetalol | 9.31 | 0.969 | 7.4 | 5.466 | 5.463 | 5.465 | 5.465 | 12.940 | 1.112 |
| Lidocaine | 61.7 | 1.790 | 7.4 | 2.436 | 2.436 | 2.438 | 2.437 | 5.216 | 0.717 |
| Metoprolol | 23.7 | 1.375 | 7.4 | 1.803 | 1.803 | 1.804 | 1.803 | 3.600 | 0.556 |
| Nadolol | 3.88 | 0.589 | 7.4 | 1.065 | 1.065 | 1.065 | 1.065 | 1.717 | 0.235 |
| Pindolol | 16.7 | 1.223 | 7.4 | 2.239 | 2.239 | 2.239 | 2.239 | 4.712 | 0.673 |
| Procaine | 1.94 | 0.288 | 5.5 | 0.595 | 0.596 | 0.596 | 0.596 | 0.428 | -0.368 |
| Propranolol | 32.5 | 1.512 | 7.4 | 12.610 | 12.600 | 12.596 | 12.602 | 31.148 | 1.493 |
| Ranitidine | 0.49 | -0.310 | 7.4 | 0.875 | 0.875 | 0.875 | 0.875 | 1.232 | 0.091 |
| Scopolamine | 11.8 | 1.072 | 7.4 | 0.884 | 0.885 | 0.885 | 0.885 | 1.257 | 0.099 |
| Sulpiride | 0.692 | -0.160 | 7.4 | 1.099 | 1.099 | 1.099 | 1.099 | 1.804 | 0.256 |
| Sumatriptan | 3 | 0.477 | 6.5 | 0.766 | 0.766 | 0.766 | 0.766 | 0.837 | -0.077 |
| Terbutaline | 1.4 | 0.146 | 7.4 | 0.892 | 0.892 | 0.892 | 0.892 | 1.276 | 0.106 |
| Verapamil | 155.33 | 2.191 | 7.4 | 19.021 | 18.958 | 18.894 | 18.958 | 47.361 | 1.675 |

The reference curve obtained is described by the formula log_{Pm} = 0.8836*log_{k'IAM}+0.3281.

As can be understood by one skilled in the art, many modifications to the exemplary embodiments described herein are possible. The invention, rather, is intended to encompass all such modification within its scope, as defined by the claims.

## Claims

1. A method for determining drug permeability, comprising:
for each reference drug of at least two reference drugs having (i) the same ionization state at a given pH and (ii) a known drug permeability determined by the same drug permeability testing technique, calculating a metric related to retention time of said each reference compound eluted from a liquid chromatography column having an immobilized artificial membrane functional group; and
based on each said metric and each said known drug permeability, expressing drug permeability as a function of said metric.

2. The method of claim 1 further comprising:
calculating said metric related to retention time for a further drug eluted from said liquid chromatography column, said further drug having said ionization state at said given pH and an unknown drug permeability; and
assessing drug permeability for said further drug based on said metric for said further drug and said function.

3. The method of claim 2 wherein said assessing drug permeability involves extrapolation or interpolation from said linear curve.

4. The method of claim 3 wherein said assessing drug permeability involves interpolation.

5. The method of any one of claims 1 to 4 wherein the drug permeability testing technique involves using Caco-2 cells.

6. The method of any one of claims 1 to 5 wherein the immobilized artificial membrane functional group is a phospholipid.

7. The method of any one of claims 1 to 6 wherein the retention time is measured in part by monitoring ultraviolet absorbance of the column eluant.

8. The method of claim any one of claims 1 to 7 wherein said metric is capacity factor.

9. The method of any one of claims 1 to 8 wherein expressing drug permeability as a function of said metric involves expressing the logarithm of known drug permeability as a function of the logarithm of capacity factor.

10. The method of any one of claims 1 to 9 wherein expressing drug permeability as a function of said metric yields a linear curve.

11. The method of any one of claims 1 to 10 wherein a mobile phase of said liquid chromatography column has a pH of between 7.0 and 7.5.

12. The method of any one of claims 1 to 11 wherein a mobile phase of said liquid chromatography column has a pH of 7.4.

13. The method of any one of claims 1 to 12 wherein a mobile phase of said liquid chromatography column comprises an organic solvent.

14. The method of any one of claims 1 to 13 wherein a mobile phase of said liquid chromatography column comprises ammonium phosphate buffer and acetonitrile.

15. The method of claim 14 wherein a mobile phase of said liquid chromatography column comprises about 85% ammonium phosphate buffer (v/v) and 15% acetonitrile (v/v).

16. A method of determining apparent drug permeability for a chemical compound comprising:
(a) categorizing said chemical compound based on ionisation state at a given pH;
(b) introducing said chemical compound to a liquid chromatography column, said column having an immobilized artificial membrane functional group;
(c) eluting said chemical compound from the column with a mobile phase;
(d) measuring the retention time required to elute the chemical compound from said column;
(e) calculating a metric from the retention time of said chemical compound; and
(f) determining an apparent drug permeability value for said chemical compound by comparing said metric with a reference curve derived for reference compounds having said ionisation state at said given pH.

17. The method of claim 16 wherein the immobilized artificial membrane functional group is a phospholipid.

18. The method of claim 16 or claim 17 wherein said measuring the retention time comprises detecting the elution of the chemical compound from the column by monitoring ultraviolet absorbance of the column eluant.

19. The method of any one of claims 16 to 18 wherein the metric that is calculated is capacity factor.

20. The method of any one of claims 16 to 19 wherein said mobile phase has a pH of between 7.0 and 7.5.

21. The method of any one of claims 16 to 20 wherein said mobile phase has a pH of about 7.4.

22. The method of any one of claims 16 to 21 wherein said mobile phase comprises an organic solvent.

23. The method of any one of claims 16 to 22 wherein said mobile phase comprises ammonium phosphate buffer and acetonitrile.

24. The method of claim 23 wherein said mobile phase comprises about 85% ammonium phosphate buffer (v/v) and 15% acetonitrile (v/v).

25. The method of any one of claims 16 to 24 wherein the reference curve is a linear curve.

26. The method of any one of claims 16 to 25 wherein said determining the apparent drug permeability value comprises interpolating or extrapolating from the reference curve.
